# EUROPEAN PATENT SPECIFICATION

(11) **EP 3 042 569 B1**
(45) Date of publication and mention of the grant of the patent: **13.11.2019**
(21) Application number: 14841643.1
(22) Date of filing: 04.09.2014
(51) Int. Cl.: A23G 1/36

(54) **CHOCOLATE**
SCHOKOLADE
CHOCOLAT

(30) Priority: 06.09.2013 JP 2013185109
(43) Date of publication of application: 13.07.2016
(73) Proprietor: The Nisshin OilliO Group, Ltd., Tokyo 104-8285 (JP)
(72) Inventor: OONISHI, Kiyomi, Yokosuka-shi Kanagawa 239-0832 (JP)
(74) Representative: Dennemeyer & Associates S.A.
(86) International application number: PCT/JP2014/004553
(87) International publication number: WO 2015/033568

(56) References cited:
- EP-A1- 1 886 988
- EP-A1- 3 042 568
- WO-A1-2006/121182
- JP-A- H0 475 593
- JP-A- H1 198 952
- JP-A- H05 311 190
- JP-A- S63 202 340
- JP-A- 2005 213 304
- JP-A- 2007 185 123
- US-A- 3 796 816
- US-A- 3 796 816

## Description

### CROSS-REFERENCE TO RELATED APPLICATION

This application claims priority from Japanese Patent Application No. 2013-185109 filed with the Japan Patent Office on September 6, 2013.

### TECHNICAL FIELD

The present invention relates to a chocolate having sharp melting mouthfeel.

### BACKGROUND ART

A chocolate molded into a block or plate shape is often manufactured by adding solid fat having a relatively high melting point as well as cocoa butter so that a chocolate product is prevented from loosening and deforming. It is considered that this is largely influenced by the fact that a chocolate product has been commonly exposed to high temperature in the distribution stage of food because the temperature could not be controlled in the distribution stage. However, in recent years, food can be distributed at various temperature zones according to the type of food to be distributed. In brief, concern about melting of chocolate in the distribution stage has been eliminated. Accordingly, the melting point of fats and oils does not need to be consciously set high. consciously set high. As a result, a chocolate with further sharp melting mouthfeel associated with a cool sensation is being developed.

In order to develop a chocolate having sharp melting mouthfeel associated with a cool sensation, for example, JP-A-63-202340 discloses solid chocolates with a cool sensation having the following characteristics. That is, the solid chocolates are solid chocolates subjected to a tempering treatment. Furthermore, the solid chocolates contain a fats and oils component essentially including cacao butter and/or fat similar to cacao butter, and fractionated soft oil of laurin fats and oils. Moreover, the solid chocolates include milk fat as an additional component as necessary. US 3796816 A relates to hard butter compositions from non-randomized triglycerides. EP 3042568 A1 relates to chocolate having soft texture and smooth melting mouthfeel. JP H04-75593 A relates to hard butter and chocolate using triglyceride. JP H05-311190 A relates to triglycerides of A2B (A is 16 or more C saturated fatty acid and B is 12 or less C saturated fatty acid). JP H11-98952 A relates to a food comprising middle chain fatty acid triglyceride and SUS type triglyceride. EP 1886988 relates to an intermolecular compound of fatty acid triglyceride.

### CITATION LIST

### PATENT LITERATURE

PATENT LITERATURE 1: JP-A-63-202340
PATENT LITERATURE 2: US 3796816 A
PATENT LITERATURE 3: EP 3042568 A1
PATENT LITERATURE 4: JP H04-75593 A
PATENT LITERATURE 5: JP H05-311190 A
PATENT LITERATURE 6: JP H11-98952 A
PATENT LITERATURE 7: EP 1886988

### SUMMARY OF THE INVENTION

### PROBLEMS TO BE SOLVED BY THE INVENTION

The chocolate in the above-described patent publication can be molded into a plate-like shape, particle-like shape, and the like. However, this chocolate has bad snap (characteristics of breaking with a sudden sharp noise).

An object of the present invention is to provide a chocolate having good snap and sharp melting mouthfeel associated with a cool sensation.

### SOLUTION TO THE PROBLEMS

The present inventor has intensively conducted researches in order to solve the above-described problem. As a result, it was found that the problem can be solved by containing a specific amount of tricaprin in fats and oils contained in chocolate.

That is, according to an aspect of the present invention, there can be provided a chocolate that contains 25 to 65 mass% of fats and oils, the fats and oils containing 10 to 40 mass% of tricaprin.

According to a preferred aspect of the present invention, there can be provided a chocolate that further contains in the fats and oils 40 to 85 mass% of triacylglycerol containing oleic acid bound to the 2-position and saturated fatty acid of 16 carbons or more bound to the 1-position and the 3-position.

According to a preferred aspect of the present invention, there can be provided a chocolate containing 60 mass% or less of 1,3-distearoyl-2-oleoylglycerol in the triacylglycerol.

According to a preferred aspect of the present invention, there can be provided the above-described chocolate being subjected to a tempering treatment.

According to a preferred aspect of the present invention, there can be provided a chocolate containing a eutectic between the fats and oils crystal of the tricaprin and the fats and oils crystal of the triacylglycerol.

According to a preferred aspect of the present invention, there can be provided the above-described chocolate being molded.

Furthermore, according to an aspect of the present invention, there can be provided a method of manufacturing a chocolate, including: performing a tempering treatment to a melted chocolate prepared so as to contain 25 to 65 mass% of fats and oils, the fats and oils containing 10 to 40 mass% of tricaprin; and cooling and solidifying a liquid chocolate obtained after the tempering treatment.

### EFFECTS OF THE INVENTION

According to the present invention, there can be provided a chocolate having good snap and sharp melting mouthfeel associated with a cool sensation.

### DESCRIPTION OF EMBODIMENTS

### Definition and Analysis

As described herein, triacylglycerol (hereinafter, also indicated by TAG) is an ester compound having a molecular structure in which three fatty acid molecules are ester-bound to one molecule of glycerol. The 1-position, 2-position, and 3-position of TAG indicate the positions of carbon atoms of glycerol to which fatty acid is bound. It is noted that abbreviations of the constituent fatty acid contained in TAG are as follows. A: arachidic acid, O: oleic acid, P: palmitic acid, S: saturated fatty acid of 16 or more carbons, St: stearic acid, and U: unsaturated fatty acid of 16 or more carbons. Here, the "constituent fatty acid contained in TAG" means fatty acid from which each of three acyl groups constituting the TAG molecule is derived.

The composition of triacylglycerol contained in fats and oils can be analyzed by gas chromatography (in accordance with JAOCS, vol 70, 11, 1111-1114 (1993)) and silver ion column-HPLC (in accordance with J. High Resol. Chromatogr., 18, 105-107 (1995)).

The constituent fatty acid of fats and oils can be analyzed by gas chromatography (in accordance with AOCS Celf-96).

The chocolate according to the present invention will be described in order below.

As described herein, a chocolate is not limited to the chocolate defined in "Fair Competition Codes concerning Labeling on Chocolates" (Japan Chocolate Industry Fair Trade Conference) or laws and regulations. The chocolate according to the present invention includes edible fats and saccharides as a main raw material. Cacao components (cacao mass, cocoa powder, and the like), dairy products, flavors, or emulsifiers are added to the main raw material as necessary. Such chocolate is manufactured through chocolate manufacturing processes (all or some of mixing process, refining process, conching process, molding process, cooling process, and the like). Also, the chocolate according to the present invention includes white chocolate and color chocolate as well as dark chocolate and milk chocolate.

The chocolate according to the present invention contains 25 to 65 mass% of fats and oils. The content of fats and oils in the chocolate according to the present invention is preferably 28 to 60 mass%, and more preferably 30 to 55 mass%. It is noted that the fats and oils in the chocolate according to the present invention include fats and oils (cocoa butter, milk fat, and the like) derived from oil-containing raw materials (cacao mass, cocoa powder, whole milk powder, and the like), other than the formulated fats and oils. For example, in general, the content (oil percentage) of fats and oils (cocoa butter) in cacao mass is 55 mass%; the content (oil percentage) of fats and oils (cocoa butter) in cocoa powder is 11 mass%; and the content (oil percentage) of fats and oils (milk fat) in whole milk powder is 25 mass%. Therefore, the content of fats and oils in the chocolate comes to be a sum of the values each obtained by multiplying a formulated amount (mass%) of each raw material in the chocolate by the oil percentage.

The fats and oils contained in the chocolate according to the present invention contain 10 to 40 mass% of tricaprin. Here, tricaprin (1,2,3-tridecanoyl glycerol) is triacylglycerol in which three molecules of capric acid (n-decanoic acid) are ester-bound to glycerol. The content of tricaprin in the fats and oils contained in the chocolate is preferably 15 to 35 mass%. When the content of tricaprin in the fats and oils contained in the chocolate falls in the above-described range, there can be obtained a chocolate having good snap and sharp melting mouthfeel associated with a cool sensation.

In the chocolate according to the present invention, the content of fats and oils in the chocolate and the content of tricaprin in the fats and oils satisfy the above-described ranges. As long as these conditions are satisfied, any fats and oils raw material may be used for manufacturing the chocolate according to the present invention. Examples of a usable fats and oils raw material may include coconut oil, palm kernel oil, palm oil, fractionated palm oil (palm olein, palm super olein, and the like), shea butter, fractionated shea oil, sal fat, fractionated sal oil, illipe butter, soy bean oil, rapeseed oil, cottonseed oil, safflower oil, sunflower oil, rice oil, corn oil, sesame oil, olive oil, milk fat, cocoa butter, mixed oil thereof, and processed fats and oils olive oil, milk fat, cocoa butter, mixed oil thereof, and processed fats and oils thereof. Furthermore, the fats and oils may contain as constituent fatty acid triacylglycerol containing fatty acid of 6 to 10 carbons (so-called medium chain fatty acid triacylglycerol) other than tricaprin. Hereinafter, the medium chain fatty acid triacylglycerol as well as tricaprin are also indicated by MCT. However, in this case, the content of MCT other than tricaprin in the fats and oils used as a raw material is preferably 30% or less, more preferably 20% or less, further preferably 10% or less, and most preferably 5% or less, of the content of tricaprin in the fats and oils.

The chocolate according to the present invention is suitable for a tempered-type chocolate. The fats and oils contained in the chocolate preferably contain, in addition to the MCT, SOS-type triacylglycerol (hereinafter, also indicated as SOS) in which oleic acid is bound to the 2-position and saturated fatty acid of 16 or more carbons is bound to the 1-position and the 3-position. The content of the SOS in the fats and oils contained in the chocolate is preferably 40 to 85 mass%, more preferably 45 to 80 mass%, further preferably 50 to 80 mass%, and most preferably 55 to 75 mass%. The saturated fatty acid of 16 or more carbons bound to the 1-position and the 3-position of the SOS may not be necessarily the same saturated fatty acid. The number of carbons in the saturated fatty acid bound to each of the 1-position and the 3-position is preferably 16 to 26, and more preferably 16 to 22. Furthermore, saturated fatty acid of 16 to 18 carbons constitutes preferably 90 mass% or more, and more preferably 95 mass% or more, of the total amount of saturated fatty acid bound to the 1-position and the 3-position. When the content of the SOS in the fats and oils contained in the chocolate falls in the above-described range, the chocolate having good snap can be obtained.

Furthermore, the fats and oils contained in the chocolate according to the present invention contain tricaprin and SOS in a combined amount of preferably 60 mass% or more, more preferably 70 mass% or more, and further preferably 80 mass% or more.

Fats and oils abundantly containing SOS (fats and oils containing SOS in an amount of 40 mass% or more, and preferably in an amount of 60 mass% or more) are preferably used as fats and oils to be contained in the chocolate, so that the fats and oils contained in the chocolate according to the present invention contain the above-described SOS-type triacylglycerol. Examples of the fats and oils abundantly containing SOS (hereinafter, also indicated by SOS fats and oils) may include cocoa butter, palm oil, shea butter, sal fat, allanblackia fat, mowrah fat, illipe butter, mango kernel oil, and fractionated oils thereof. Furthermore, as having been already known, there may be used fats and oils obtained by performing a transesterification reaction between palmitic acid, stearic acid, or lower alcohol esters thereof and high oleic acid fats and oils such as high oleic sunflower oil with the 1,3-positions selective lipase product and thereafter fractionating the reaction product as necessary.

The fats and oils contained in the chocolate according to the present invention may contain, as one type of the SOS-type triacylglycerol, StOSt-type triacylglycerol (1,3-distearoyl-2-oleoylglycerol, hereinafter, also indicated by StOSt) in which oleic acid is bound to the 2-position, and stearic acid is bound to the 1-position and the 3-position. The content of StOSt in the SOS contained in the fats and oils contained in the chocolate is preferably 60 mass% or less, more preferably 50 mass% or less, and further preferably 20 to 40 mass%. When the content of StOSt in the above-described SOS falls in the above-described range, a chocolate having good snap and sharp melting mouthfeel associated with a cool sensation is likely to be obtained.

An example of a preferred embodiment of the chocolate according to the present invention may include a chocolate in which the ratio between the content of tricaprin and the content of fats and oils abundantly containing SOS in the fats and oils contained in the chocolate is 5 : 95 to 50 : 50 in terms of mass ratio.

The chocolate according to the present invention preferably contains saccharides other than fats and oils. Examples of usable saccharides may include sucrose (sugar and powder sugar), lactose, glucose, fructose, maltose, reduced saccharified starch, liquid sugar, enzymatically converted starch syrup, isomerized liquid sugar, sucrose-bound starch syrup, reducing sugar polydextrose, oligosaccharide, sorbitol, reduced lactose, trehalose, xylose, xylitose, maltitol, erythritol, mannitol, raffinose, and dextrin. The content of saccharides in the chocolate according to the present invention is preferably 20 to 60 mass%, more preferably 25 to 55 mass%, and further preferably 30 to 50 mass%.

Raw materials commonly formulated in chocolate can be used other than fats and oils and saccharides in the chocolate according to the present invention. Specific examples of usable raw materials may include dairy products such as whole milk powder and skim milk, cacao components such as cacao mass and cocoa powder, soy flour, soy protein, processed fruit products, processed vegetable products, various powders such as green tea powder and coffee powder, gums, starches, emulsifiers, antioxidants, colorants, and flavors.

The chocolate according to the present invention can be manufactured by a known method. Examples of the raw material usable in manufacturing the chocolate according to the present invention may include fats and oils, cacao components, saccharides, dairy products, and emulsifiers. The chocolate according to the present invention can be manufactured through a mixing process, refining process, conching process, and cooling process such that the content of fats and oils in the chocolate according to the present invention finally reaches 25 to 65 mass%. Especially, it is preferred to perform a tempering treatment after the conching process, and then perform cooling and solidification in order to obtain a tempered-type chocolate.

The tempering treatment which is a preferred embodiment in the process for manufacturing the chocolate according to the present invention is an operation for generating crystal nuclei of stable crystals of fats and oils in the chocolate that is in a melted state (a state in which fats and oils crystals are completely melted). By this operation, the SOS-type triacylglycerol contained in the fats and oils contained in the chocolate can be solidified as stable crystals (β-type). As an example of such an operation, the product temperature of the chocolate being in a melted state at 40 to 50°C is lowered to approximately 26 to 29°C, and thereafter the temperature is increased approximately 28 to 31°C again. Alternatively, seeding treatment may be performed in place of tempering treatment. The seeding treatment may be performed by, for example, using a seed agent which is a stable crystal of the SOS-type triacylglycerol such as StOSt and BOB (1,3-dibehenoyl-2-oleoylglycerol). That is, instead of tempering treatment, 0.05 to 5 mass% of a seed agent may be added (a seeding treatment) to the fats and oils in the chocolate at a temperature that prevents the stable crystal as the seed agent from completely melting. The chocolate according to the present invention preferably contains a eutectic between a stable crystal of the SOS-type triacylglycerol and a crystal of tricaprin.

The chocolate according to the present invention is obtained by performing a tempering treatment to a melted chocolate, filling the resultant liquid chocolate into a mold, and thereafter cooling and solidifying the filled chocolate. The chocolate according to the present invention has favorable removal from the mold (peeling from the mold), good snap, and sharp melting mouthfeel associated with a cool sensation. The chocolate according to the present invention is edible as a block of chocolate having been removed from the mold (molded) or shaped by other methods. Furthermore, the chocolate according to the present invention can be used as coating materials, filling materials, or chip materials to be mixed into dough for confectionery and bread baking products such as bread, cakes, western confectionery, baked confectionery, doughnuts, and cream puffed cakes.

### EXAMPLES

Next, the present invention will be further described in detail with reference to examples and comparative examples. The present invention is not limited to these examples and comparative examples.

As described herein, "%" means mass% unless specifically indicated.

The composition of triacylglycerol contained in fats and oils was analyzed by gas chromatography (in accordance with JAOCS, vol 70, 11, 1111-1114 (1993)) and silver ion column-HPLC (in accordance with J. High Resol. Chromatogr., 18, 105-107 (1995)).

The constituent fatty acid contained in TAG contained in fats and oils was analyzed by gas chromatography (in accordance with AOCS Celf-96).

### <Raw material fats and oils>

[MCT 1]: MCT (tricaprin) (manufactured in-house by The Nisshin OilliO Group, Ltd.) that is triacylglycerol containing only capric acid (n-decanoic acid) as constituent fatty acid was defined to be MCT 1.

[MCT 2]: MCT (manufactured in-house by The Nisshin OilliO Group, Ltd.) that contains only caprylic acid (n-octanoic acid) or capric acid (n-decanoic acid) as constituent fatty acid in which the mass ratio between the above-described n-octanoic acid and n-decanoic acid as constituent fatty acid is 75 : 25 was defined to be MCT 2.

[SOS fats and oils 1]: As SOS fats and oils 1, there was used cocoa butter (manufactured by DAITO CACAO CO., LTD., SOS content: 85.3%, StOSt content: 28.6%, 95 mass% or more of the total amount of constituent fatty acid S contained in SOS is P or St).

[SOS fats and oils 2]: Transesterification was performed between high oleic sunflower oil and stearic acid ethyl ester with 1,3-positions specific lipase. Accordingly, the reaction was performed such that stearic acid is bound to the 1-position or 3-position of triacylglycerol. The fats and oils (manufactured in-house by The Nisshin OilliO Group, Ltd., SOS content: 84.8%, StOSt content: 71.2%, 95 mass% or more of the total amount of constituent fatty acid S contained in SOS is P or St) obtained by fractionating this transesterified oil to increase the concentration of SOS-type triacylglycerol were used as SOS fats and oils 2.

### <Manufacture of chocolate>

Chocolates of Examples 1 to 4 and Comparative Examples 1 and 2 were manufactured with raw materials formulated in accordance with the formulations of Tables 1 and 2. Example 3 not forming part of the invention. That is, melted chocolates having passed through the processes of mixing, refining, and conching were subjected to a tempering treatment (seeding treatment) according to a method known in the art. The treated liquid chocolates were cooled and solidified in molds.

**[Table 1]**

| <Table 1> Formulation and Evaluation of Chocolate | | | | |
|---|---|---|---|---|
| | Example 1 | Example 2 | Example 3 | Example 4 |
| Formulation of raw materials (%) | | | | |
| MCT 1 | 5.0 | 10.38 | 19.60 | 12.22 |
| MCT 2 | - | - | - | - |
| SOS fats and oils 1 | 15.75 | 10.37 | 1.15 | - |
| SOS fats and oils 2 | - | - | - | 8.53 |
| Cacao mass | 35.0 | 35.0 | 35.0 | 35.0 |
| Powder sugar (sugar) | 43.7 | 43.7 | 43.7 | 43.7 |
| Lecithin | 0.5 | 0.5 | 0.5 | 0.5 |
| Flavors | 0.05 | 0.05 | 0.05 | 0.05 |
| Total of raw materials | 100 | 100 | 100 | 100 |
| Content of fats and oils | 40.0 | 40.0 | 40.0 | 40.0 |

| TAG composition in fats and oils (%) | | | | |
|---|---|---|---|---|
| Tricaprin | 12.5 | 26.0 | 49.0 | 30.6 |
| SOS | 74.6 | 63.2 | 43.5 | 59.0 |
| StOSt in SOS (%) | 33.5 | 33.5 | 33.5 | 49.0 |

| Evaluation results | | | | |
|---|---|---|---|---|
| Removal from mold | Excellent | Excellent | Good | Excellent |
| Snap | Excellent | Excellent | Good | Excellent |
| Melting mouthfeel | Good | Excellent | Excellent | Good |

**[Table 2]**

| <Table 2> Formulation and Evaluation of Chocolate | | |
|---|---|---|
| | Comparative Example 1 | Comparative Example 2 |
| Formulation of raw materials (%) | | |
| MCT 1 | - | - |
| MCT 2 | - | 10.38 |
| SOS fats and oils 1 | 20.75 | 10.37 |
| SOS fats and oils 2 | - | - |
| Cacao mass | 35.0 | 35.0 |
| Powder sugar (sugar) | 43.7 | 43.7 |
| Lecithin | 0.5 | 0.5 |
| Flavors | 0.05 | 0.05 |
| Total of raw materials | 100 | 100 |
| Content of fats and oils | 40.0 | 40.0 |

| TAG composition in fats and oils (%) | | |
|---|---|---|
| Tricaprin | 0.0 | 1.2 |
| SOS | 85.3 | 63.2 |
| StOSt in SOS (%) | 33.5 | 33.5 |

| Evaluation results | | |
|---|---|---|
| Removal from mold | Excellent | Good |
| Snap | Excellent | Poor |
| Melting mouthfeel | Somewhat fair | Fair |

### <Evaluation of chocolate>

The chocolates of Examples 1 to 4 and Comparative Examples 1 and 2 manufactured by the above-described method were evaluated for removal from the mold, snap, and melting mouthfeel, in accordance with the following evaluation criteria. The evaluation results are illustrated in Tables 1 and 2.

### <Evaluation method of chocolate>

### (1) Evaluation method of removal from mold

In accordance with the following criteria, 120 g of chocolate having been poured into a mold and cooled and solidified at 10°C was evaluated for release from the mold.
Excellent: Very favorable (almost entirely peeled)
Good: Favorable (slightly adhered)
Somewhat fair: Partly not peeled
Poor: Not peeled

### (2) Evaluation of snap

In accordance with the following criteria, a sample having been subjected to aging at 20°C for one week was comprehensively evaluated by five panelists.
Excellent: Fats and oils have snap equivalent to chocolate containing only cocoa butter.
Good: Fats and oils have snap somewhat weaker than chocolate containing only cocoa butter.
Somewhat fair: Fats and oils have snap weaker than chocolate containing only cocoa butter.
Poor: Fats and oils have scarce snap.

### (3) Evaluation method of melting mouthfeel

In accordance with the following criteria, evaluation was comprehensively performed by five panelists.
Excellent: Very favorable with good snap and sharp melting mouthfeel associated with a cool sensation
Good: Favorable with snap and sharp melting mouthfeel associated with a cool sensation
Fair: Sharp melting mouthfeel
Somewhat fair: Moderate melting mouthfeel
Poor: Bad melting mouthfeel

### <Crystallization behavior of fats and oils in chocolate>

The crystallization behavior of MCT 1 was checked. MCT 1 was heated up to about 60°C to be completely melted. Several grams of the completely melted MCT 1 were filled in an aluminum foil cup. This cup was cooled in a constant temperature incubator in which cold air at 8°C circulates, thereby solidifying the MCT 1 in the cup. Immediately thereafter, the solidified MCT 1 as a sample was subjected to X-ray diffraction measurement in the low to high angle regions using an X-ray diffraction apparatus (Rigaku Corporation, sample horizontal-type X-ray diffraction apparatus Ultima IV) maintained at 20°C. As a result, in the low angle region, a diffraction peak corresponding to large long spacing (plane 001 in Miller index) was obtained at 27 Å. This is almost the same as the long spacing of the β-type crystal of tricaprin which is described in literature values.

Furthermore, in the high angle region, a characteristic diffraction peak corresponding to the β-type crystal was first obtained at 4.6 Å. This demonstrates that a sublattice constituted by planes each containing zigzag C-C bonds of an acyl chain and being arranged in parallel to each other is the stable triclinic system. Furthermore, in the high angle region, two diffraction peaks commonly observed in the β-type crystal of simple saturated TAG were obtained at 3.9 Å and 3.8 Å. From these observations, it was confirmed that the β-type crystal of MCT 1 can be generated by simple cooling.

Next, the crystallization behavior of MCT 1/cocoa butter-based blend fats and oils was measured using an X-ray diffraction apparatus. Hereinafter, the result will be described. Similarly to tempered-type chocolate, crystallized stable blend fats and oils can be obtained by generating the V-type crystal of cocoa butter (hereinafter, also indicated by CB) in the blend fats and oils. For this reason, before the MCT 1/cocoa butter-based fats and oils blend is cooled and solidified, 1 mass% of a β-type seed agent of StOSt was added and mixed to the fats and oils blend cooled to 28 to 30°C. Then, about 3.5 g of the seed agent-containing blend fats and oils was filled into a resin mold. Subsequently, this mold was cooled in a constant temperature incubator at 8°C, thereby solidifying the blend fats and oils. As an example of the result, the crystallization behavior of a MCT 1 and CB-containing fats and oils blend prepared so as to have a mass ratio of MCT 1/CB = 26/74 will be described below.

In the low angle region of the X-ray diffraction pattern provided by the solidified fats and oils blend, clear diffraction peaks were obtained at 65 Å, 32 Å, and 27 Å. The diffraction peak at 65 Å was assigned to the 001 plane of the crystal of CB; the diffraction peak at 32 Å was assigned to the 002 plane of the crystal of CB; and the diffraction peak at 27 Å was assigned to the 001 plane of the crystal of MCT 1. On the other hand, in the high angle region, a strong diffraction peak being characteristic of the β-type crystal was obtained at 4.6 Å. In addition to this, intermediate strength diffraction peaks were obtained at 4.0 Å, 3.9 Å, and 3.8 Å. These diffraction peaks were assigned to the β-type crystal of MCT 1 and the β-type crystal of CB. In brief, the diffraction peak at 4.0 Å is derived from the V-type crystal of CB. The diffraction peaks at 3.9 Å and 3.8 Å are each a diffraction peak obtained by overlapping of the diffraction peak derived from the β-type crystal of MCT 1 and the diffraction peak derived from the V-type crystal of CB.

This result demonstrates that the V-type crystal of CB and the β-type crystal of MCT 1 were simultaneously generated while the blend fats and oils to which a seed agent has been added and mixed was cooled. This demonstrates that this fats and oils blend-based crystal is a eutectic containing two stabilized crystals that are the β2-3 type crystal of CB and the β-2 type crystal of MCT 1.

Furthermore, the chocolate according to the present invention may be the following first to sixth chocolates.

The first chocolate has a fats and oils content of 25 to 65 mass% and containing 10 to 40 mass% of tricaprin in the fats and oils.

The second chocolate according to the first chocolate has an SOS content in the fats and oils of 40 to 85 mass%. Here, the SOS is triacylglycerol including oleic acid bound to the 2-position and saturated fatty acid of 16 or more carbons bound to the 1,3-positions.

In the third chocolate according to the first or second chocolate, the StOSt content in the SOS content in the fats and oils is 60 mass% or less. Here, StOS is 1,3-distearoyl-2-oleoylglycerol.

The fourth chocolate according to any of the first to third chocolates is subjected to a tempering treatment.

In the fifth chocolate according to any of the first to fourth chocolates, the fats and oils crystal of the tricaprin and the fats and oils crystal of the SOS are contained in a eutectic state in the fats and oils of the chocolate.

The sixth chocolate according to any of the first to fifth chocolates is molded.

Furthermore, the method of manufacturing a chocolate according to the present invention may include: performing a tempering treatment to a melted chocolate prepared so as to have a fats and oils content of 25 to 65 mass% and contain 10 to 40 mass% of tricaprin in the fats and oils; and cooling and solidifying the tempered chocolate.

## Claims

1. A chocolate comprising 25 to 65 mass% of fats and oils, the fats and oils containing 10 to 40 mass% of tricaprin.

2. The chocolate according to claim 1, wherein the fats and oils further contain 40 to 85 mass% of triacylglycerol in which oleic acid is bound to 2-position and saturated fatty acid of 16 carbons or more is bound to 1-position and 3-position.

3. The chocolate according to claim 2, wherein a content of 1,3-distearoyl-2-oleoylglycerol in the triacylglycerol is 60 mass% or less.

4. The chocolate according to any one of claims 1 to 3, the chocolate being subjected to a tempering treatment or a seeding treatment.

5. The chocolate according to any one of claims 2 to 4, wherein the fats and oils contain a eutectic between a fats and oils crystal of the tricaprin and a fats and oils crystal of the triacylglycerol.

6. The chocolate according to any one of claims 1 to 5, the chocolate being molded.

7. A method of manufacturing a chocolate, comprising:
performing a tempering treatment to a melted chocolate prepared so as to contain 25 to 65 mass% of fats and oils, the fats and oils containing 10 to 40 mass% of tricaprin; and
cooling and solidifying a liquid chocolate obtained after the tempering treatment.

## Patentansprüche

1. Schokolade, umfassend 25 bis 65 Massen-% Fette und Öle, wobei die Fette und Öle 10 bis 40 Massen-% Tricaprin enthalten.

2. Schokolade nach Anspruch 1, wobei die Fette und Öle ferner 40 bis 85 Massen-% Triacylglycerin enthalten, in dem Ölsäure an Position 2 gebunden ist und gesättigte Fettsäure mit 16 Kohlenstoffatomen oder mehr an Position 1 und Position 3 gebunden ist.

3. Schokolade nach Anspruch 2, wobei der Gehalt an 1,3-Distearoyl-2-oleoylglycerin im Triacylglycerin 60 Massen-% oder weniger beträgt.

4. Schokolade nach einem der Ansprüche 1 bis 3, wobei die Schokolade einer Temperbehandlung oder einer Impfbehandlung unterzogen wird.

5. Schokolade nach einem der Ansprüche 2 bis 4, wobei die Fette und Öle ein Eutektikum zwischen einem Fett- und Ölkristall des Tricaprins und einem Fett- und Ölkristall des Triacylglycerins enthalten.

6. Schokolade nach einem der Ansprüche 1 bis 5, wobei die Schokolade geformt ist.

7. Verfahren zur Herstellung von Schokolade, umfassend:
Durchführen einer Temperbehandlung an einer geschmolzenen Schokolade, die so hergestellt ist, dass sie 25 bis 65 Massen-% Fette und Öle enthält, wobei die Fette und Öle 10 bis 40 Massen-% Tricaprin enthalten; und
Abkühlen und Verfestigen einer flüssigen Schokolade, die nach der Temperbehandlung erhalten wurde.

## Revendications

1. Chocolat comprenant 25 à 65 % en masse de graisses et d'huiles, les graisses et huiles contenant 10 à 40 % en masse de tricaprine.

2. Chocolat selon la revendication 1, dans lequel les graisses et huiles contiennent en outre 40 à 85 % en masse de triacylglycérol, l'acide oléique étant lié en position 2 et un acide gras saturé de 16 atomes de carbone ou plus étant lié en position 1 et en position 3.

3. Chocolat selon la revendication 2, dans lequel la teneur en 1,3-distéaroyl-2-oléoylglycérol dans le triacylglycérol est inférieure ou égale à 60 % en masse.

4. Chocolat selon l'une quelconque des revendications 1 à 3, le chocolat étant soumis à un traitement par trempe ou à un traitement par ensemencement.

5. Chocolat selon l'une quelconque des revendications 2 à 4, dans lequel les graisses et huiles contiennent un eutectique entre un cristal de graisses et d'huiles de la tricaprine et un cristal de graisses et d'huiles du triacylglycérol.

6. Chocolat selon l'une quelconque des revendications 1 à 5, le chocolat étant moulé.

7. Procédé de fabrication d'un chocolat, comprenant les étapes consistant à :
effectuer un traitement par trempe sur un chocolat fondu préparé de manière à contenir 25 à 65 % en masse de graisses et d'huiles, les graisses et huiles contenant 10 à 40 % en masse de tricaprine ; et
refroidir et solidifier un chocolat liquide obtenu après le traitement par trempe.
